# FASCICULE DE BREVET EUROPEEN

(11) **EP 1 745 955 B1**
(45) Date de publication et mention de la délivrance du brevet: **20.10.2010**
(21) Numéro de dépôt: 06010521.0
(22) Date de dépôt: 22.05.2006
(51) Int. Cl.: B60H 1/00, B60H 3/06

(54) **Fermeture de boitier avec élément coulissant**
Verschluss eines Gehäuses mit einem Gleitelement
Closure of a housing with a sliding element

(30) Priorité: 22.07.2005 DE 102005034411
(43) Date de publication de la demande: 24.01.2007
(73) Titulaire: Valeo Klimasysteme GmbH, 96476 Rodach (DE)
(72) Inventeur: Koch, Peter, 96476 Bad Rodach (DE)
(74) Mandataire: Léveillé, Christophe

(56) Documents cités:
- WO-A-02/36242
- DE-A1- 4 021 460
- FR-A- 2 735 724
- US-A- 4 576 307
- US-A- 5 740 774

## Description

La présente invention concerne un couvercle pour fermer une ouverture dans un boîtier, notamment une ouverture de service sur un boîtier d'un équipement de chauffage, de ventilation et/ou de climatisation d'un véhicule.

Pour fermer les ouvertures de service sur le boîtier d'un équipement de chauffage, de ventilation et/ou de climatisation dans l'état de la technique, on emploie essentiellement des couvercles qui sont fixés au moyen de brides, lesquelles sont formées à la fois sur le boîtier et sur le couvercle, ainsi que des accessoires de fixation qui maintiennent ces brides ensemble tels que des vis ou des attaches. Par conséquent, ces brides se trouvent généralement à proximité du bord de l'ouverture sous la forme de nervures de guidage, par exemple. Les accessoires de fixation sont, par exemple, des attaches qui compriment les nervures de guidage l'une contre l'autre. Une attache de ce type peut ici aussi bien être fournie séparément du couvercle et du boîtier ou alors être montée sur l'un de ces éléments et être mobile. On connaît notamment un tel agencement du document WO 02/36242 A1.

Les dispositifs de fermeture connus sont satisfaisants pour ce qui concerne l'étanchéité du boîtier. Leur utilisation suppose cependant qu'il existe un espace libre suffisant à proximité de la bride pour qu'une personne qui effectue des travaux d'entretien, par exemple, puisse manipuler les accessoires de fixation. Si les accessoires de fixation prévus sont des attaches, le desserrage d'une attache suppose qu'elle puisse être manipulée avec un ou plusieurs doigts pour l'amener en position de déverrouillage ou de verrouillage. Si l'attache en position déverrouillée n'est reliée ni avec le boîtier ni avec le couvercle, elle risque d'être perdue pendant la manipulation. C'est justement dans les véhicules modernes que les constructeurs recherchent un niveau d'intégration de plus en plus élevé, par exemple des groupes installés dans le compartiment moteur du véhicule. Cela s'effectue souvent au détriment de la facilité d'entretien et de maintenance, car l'accès à de nombreux groupes est gêné par d'autres groupes. Par conséquent, un objectif de la construction est d'utiliser le plus efficacement possible les possibilités d'accès existantes aux groupes qui sont installés dans le compartiment moteur d'un véhicule, par exemple.

Par conséquent, l'objet de la présente invention est de fournir un dispositif de fermeture pour une ouverture dans un boîtier qui concrétise, pour un dispositif de fermeture de ce type, l'objectif de construction formulé précédemment de manière générale d'une utilisation la plus optimale possible de l'espace. L'objet de la présente invention est notamment de fournir un couvercle pour une ouverture de service qui nécessite une opération de montage simplifiée des accessoires de fixation et un espace réduit pour l'accomplissement de celle-ci. Le dispositif de fermeture permet idéalement une opération de montage ou de démontage d'une seule main.

Cet objet est réalisé par les caractéristiques de la revendication indépendante, des perfectionnements appropriés étant décrits par les caractéristiques des revendications dépendantes. La présente invention propose notamment un dispositif de fermeture destiné à fermer une ouverture d'un boîtier qui comprend un couvercle allongé et un élément allongé. L'élément allongé s'étend ici le long d'un axe longitudinal du couvercle. Des moyens de guidage sont prévus sur le couvercle, lesquels permettent un décalage en longueur de l'élément, au moins par section, au-delà de la projection longitudinale du couvercle et entre deux positions de l'élément par rapport au couvercle.

L'utilisation d'un élément tel que celui décrit ci-dessus permet de supprimer les attaches dont le montage nécessiterait la présence d'un espace de montage supplémentaire autour du bord de l'ouverture. Au lieu de cela, le dispositif de fermeture conforme à l'invention prévoit de disposer un élément sur le couvercle qui peut être décalé par rapport au couvercle dans le sens des axes longitudinaux du couvercle et de l'élément. Si la forme adoptée pour le couvercle est rectangulaire, ce décalage dans le sens de la longueur s'effectue alors parallèlement aux côtés longs du couvercle rectangulaire. Un décalage dans cette direction est autorisé dans la zone où interviennent les moyens de guidage. Un décalage transversal ou en biais par rapport à cette direction, c'est-à-dire notamment perpendiculairement au plan défini par le couvercle rectangulaire, est empêché lors du fonctionnement normal du moyen de guidage. Cela sert à rendre l'élément imperdable, car l'élément et le couvercle ne peuvent pas être séparés sans difficulté. L'invention prévoit que le décalage en longueur de l'élément s'étende au moins par section au-delà de la projection longitudinale du couvercle. Au moins une section de l'élément dépasse ainsi au-delà de la projection longitudinale du couvercle après un décalage en conséquence. Cette section qui dépasse de l'élément peut servir à venir en prise avec le boîtier qui entoure l'ouverture à fermer. Une autre section de l'élément continue ici d'être guidée dans les moyens de guidage du couvercle afin de maintenir la liaison de l'élément avec le couvercle. Conformément à l'invention, le décalage en longueur de l'élément a lieu entre deux positions. Ces positions définissent deux positions finales du décalage en longueur de l'élément par rapport au couvercle si le dispositif de fermeture est dans une position de fonctionnement ou d'utilisation. Dans cette position de fonctionnement, l'élément est inséparable du couvercle. Outre la position de fonctionnement, le dispositif de fermeture peut également adopter une position de montage qui sera abordée plus loin. Les positions finales du couvercle intervenant en situation de fonctionnement, combinées avec le décalage en longueur de l'élément par rapport au couvercle, qui est autorisé exclusivement entre celles-ci, contribuent au caractère imperdable de l'élément. La caractéristique selon laquelle l'élément allongé s'étend le long d'un axe longitudinal du couvercle inclut un léger décalage parallèle de l'axe longitudinal de l'élément par rapport à l'axe longitudinal du couvercle. Un tel décalage est lié à l'épaisseur du matériau du couvercle ou de l'élément, notamment dans le cas d'une configuration plane du couvercle et/ou de l'élément.

Les deux positions ou positions finales de l'élément correspondent à une position de déverrouillage ou à une position de verrouillage. En position de verrouillage, l'élément dépasse par section au-delà de la projection longitudinale du couvercle. En position de verrouillage, l'élément contribue à un contact clos, notamment hermétique à l'air et à la poussière entre le couvercle et le boîtier par le biais des surfaces ou des éléments de contact. Pour ce faire, l'élément sollicite le couvercle en direction du boîtier afin de produire une force de compression suffisamment élevée. En position de déverrouillage, l'élément libère le couvercle de sorte que celui-ci puisse être retiré du boîtier en le coulissant, en le basculant ou par une combinaison de coulissement et de basculement.

Dans une autre forme de réalisation, des moyens d'enclenchement sont prévus sur le dispositif de fermeture pour limiter le déplacement longitudinal de l'élément au-delà de 1a position de déverrouillage. Cela permet d'éviter que l'élément coulisse au-delà de la position de déverrouillage. La réalisation sous la forme d'un moyen d'enclenchement a pour avantage que le moyen d'enclenchement a un effet de blocage et fait ainsi office de butée lorsque l'élément se trouve en position de déverrouillage et aspire à poursuivre son mouvement, c'est-à-dire en s'éloignant de la position de verrouillage à partir de la position de déverrouillage. En revanche, les moyens d'enclenchement cèdent dans la direction opposée, c'est-à-dire lorsque l'élément se rapproche à la fois de la position de déverrouillage et de la position de verrouillage. Cela peut être réalisé, par exemple, par une configuration en forme de rampe d'au moins l'un des moyens d'enclenchement qui interviennent. L'avantage de cela est que le montage de l'élément sur le couvercle, qui ne doit normalement être effectué qu'une seule fois, peut être réalisé en toute simplicité en glissant l'élément sur les moyens d'enclenchement dans la direction dans laquelle les moyens d'enclenchement cèdent, après quoi l'effet de blocage des moyens d'enclenchement s'établit en atteignant la position de déverrouillage, ce qui empêche que l'élément se décale de nouveau de lui-même dans la direction opposée.

Les moyens d'enclenchement sont avantageusement amovibles et, lorsque les moyens d'enclenchement sont détachés, l'élément peut être amené de la position de déverrouillage en une position de montage dans laquelle l'élément et le couvercle sont séparables et assemblables. Cela a pour avantage que l'élément et le couvercle peuvent de nouveau être séparés. Les moyens d'enclenchement peuvent être amovibles dans le sens où ils cèdent par souplesse sous l'effet d'une force à appliquer par l'utilisateur et abandonnent leur enclenchement. La force à appliquer par l'utilisateur peut être perpendiculaire au sens de déplacement de l'élément par rapport au couvercle, par exemple. En comparaison de l'opération de montage, l'opération de démontage est légèrement plus compliquée en raison du mouvement supplémentaire à réaliser par l'utilisateur et qui sert à exercer une force sur les moyens d'enclenchement en vue de libérer ceux-ci. Cela est toutefois acceptable, car l'élément ne doit être séparé du couvercle au moyen d'une opération de démontage de ce type que dans des situations exceptionnelles. Par conséquent, l'avantage selon lequel l'élément ne peut pas se décaler sans une intervention correspondante de l'utilisateur de la position de déverrouillage en la position de montage dans laquelle il existe un risque pour que l'élément se sépare involontairement du couvercle est prédominant.

Il est en outre avantageux qu'il existe un mécanisme d'arrêt qui est conçu pour bloquer l'élément contre un décalage de la position de verrouillage en direction de la position de déverrouillage. Ce mécanisme d'arrêt empêche également un décalage involontaire de l'élément, et ce depuis la position de verrouillage. Il suffit cependant pour réaliser un décalage voulu de l'élément depuis la position de verrouillage que l'utilisateur exerce une force suffisante en direction du décalage afin de surmonter le mécanisme d'arrêt. Le mécanisme d'arrêt a ainsi pour rôle d'empêcher un décalage de l'élément qui pourrait être provoqué par des vibrations, par exemple. Le cas échéant, celui-ci ou un autre mécanisme d'arrêt peut empêcher un décalage involontaire de l'élément de la position de déverrouillage en direction de la position de verrouillage.

Dans une forme de réalisation avantageuse, l'élément en position de fermeture vient en prise par section avec le boîtier. L'élément établit ainsi une liaison entre le couvercle et le boîtier. L'élément est de ce fait également en mesure de transmettre des forces du boîtier au couvercle, comme par exemple des forces de compression qui contribuent à établir l'étanchéité du couvercle. Cette configuration permet à l'élément de prendre appui sur le boîtier et de pouvoir ainsi solliciter le couvercle, en conséquence de quoi on obtient un meilleur effet d'étanchéité entre le couvercle et le bord de l'ouverture du boîtier. L'élément peut notamment venir en prise dans un logement qui est façonné sur le boîtier.

Dans une forme de réalisation avantageuse, l'élément s'étend le long d'une surface extérieure du couvercle. Grâce à cette disposition, l'élément est accessible pour être manipulé par l'utilisateur. Le cas échéant, l'élément ne s'étend que le long d'une partie de la surface extérieure du couvercle. Comme l'élément s'étend parallèlement au couvercle, seule l'épaisseur du dispositif de fermeture augmente. Cette augmentation de l'épaisseur du dispositif de fermeture de l'épaisseur de l'élément et cependant faible dans la majorité des cas. De plus, une augmentation de l'épaisseur du dispositif de fermeture est aussi acceptable, car celle-ci intervient dans le sens du mouvement d'ouverture du dispositif de fermeture, lequel doit de toute façon être suffisamment dimensionné pour l'enlèvement du couvercle.

L'élément comprend avantageusement une nervure qui est guidée dans une rainure façonnée sur le couvercle. Une configuration de ce type représente un guide en translation sécurisé de l'élément sur le couvercle. La nervure peut également être raccourcie de telle sorte que la nervure forme un bord qui est guidé dans trou oblong, le trou oblong étant façonné sur le couvercle. Il est également envisageable que le couvercle comprenne une nervure et qu'une rainure soit façonnée sur l'élément.

L'invention peut également être réalisée sous la forme d'un dispositif de fermeture destiné à fermer une ouverture d'un boîtier qui comprend un clapet, le clapet comprenant au moins deux parties qui sont guidées en référence l'une par rapport à l'autre entre une position de déverrouillage, laquelle correspond à une projection raccourcie du clapet, et une position de verrouillage qui correspond à une projection rallongée du clapet, une butée des deux parties étant prévue sous la forme de moyens d'enclenchement dans la position correspondant à la projection On dispose ainsi d'un clapet à longueur variable. Du fait que le clapet en position de déverrouillage se présente avec une projection raccourcie, il peut être retiré de l'ouverture et libérer ainsi cette dernière. En position de verrouillage, laquelle correspond à une projection rallongée du clapet, ce dernier recouvre la totalité de l'ouverture, ce qui permet de garantir une fermeture étanche de l'ouverture par le clapet. En position de déverrouillage des deux parties, une poursuite du raccourcissement du clapet est empêchée par une butée. La butée est réalisée sous la forme de moyens d'enclenchement de telle sorte que la butée puisse facilement être franchie avec un mouvement relatif des deux parties, lequel est effectué dans le sens d'un montage, sans qu'une manipulation supplémentaire de la personne qui effectue le montage ne soit nécessaire. Les moyens d'enclenchement ont ainsi un effet de blocage dans un sens et cèdent dans l'autre sens.

Les moyens d'enclenchement sont avantageusement amovibles et, lorsque les moyens d'enclenchement sont détachés, les deux parties peuvent être amenées de la position de déverrouillage en une position de montage dans laquelle les deux parties du clapet sont séparables et assemblables. Lors du montage du clapet, les deux parties peuvent être réunies en position de montage, après quoi elles sont décalées l'une par rapport à l'autre en direction de la position de déverrouillage. Lors de ce décalage, les deux pièces franchissent les moyens d'enclenchement qui agissent entre elles sans que la personne qui assemble le clapet soit obligée à cet effet d'effectuer une manipulation supplémentaire en plus de l'accomplissement du mouvement relatif de translation des deux parties. Dès que les deux pièces se trouvent en position de déverrouillage, les moyens d'enclenchement s'enclenchent et produisent ainsi un effet de blocage pour un mouvement relatif qui a lieu en sens inverse du sens du montage qui vient d'être réalisé. Une libération des moyens d'enclenchement peut être réalisée, par exemple, en exerçant sur l'un des moyens d'enclenchement une force, par exemple perpendiculairement au sens du montage des deux parties.

Il est en outre avantageux qu'il existe un mécanisme d'arrêt qui soit conçu pour bloquer les deux parties contre un décalage de la position de verrouillage en direction de la position de déverrouillage. Ce mécanisme d'arrêt empêche également un décalage involontaire de l'élément, et ce depuis la position de verrouillage. Il suffit cependant pour réaliser un décalage voulu de l'élément depuis la position de verrouillage que l'utilisateur exerce une force suffisante en direction du décalage afin de surmonter le mécanisme d'arrêt. Le mécanisme d'arrêt a ainsi pour rôle d'empêcher un décalage de l'élément qui pourrait être provoqué par des vibrations, par exemple. Le cas échéant, celui-ci ou un autre mécanisme d'arrêt peut empêcher un décalage involontaire de l'élément de la position de déverrouillage en direction de la position de verrouillage.

L'une des deux parties comprend avantageusement une nervure qui est guidée dans une rainure façonnée dans l'autre des deux parties du clapet. Une configuration de ce type représente un guide en translation sécurisé des deux parties l'une par rapport à l'autre. La nervure peut également être raccourcie de telle sorte que la nervure forme un tenon qui est guidé dans trou oblong, le trou oblong étant façonné sur l'une des deux parties.

Une forme de réalisation préférentielle concerne un équipement de chauffage, de ventilation et/ou de climatisation d'un véhicule qui comprend un dispositif de fermeture tel qu'il a été décrit ci-dessus. Ce sont notamment les équipements de chauffage, de ventilation et/ou de climatisation qui sont montés dans les véhicules automobiles qui imposent de veiller à une exploitation la plus optimale possible de l'espace de montage disponible. Cela concerne avant tout aussi un filtre à air éventuellement présent et qui doit bien évidemment être remplacé à intervalles réguliers. Par conséquent, il est avantageux d'utiliser un dispositif de fermeture tel que celui décrit précédemment pour fermer les ouvertures de ce type sur un équipement de chauffage, de ventilation et/ou de climatisation d'un véhicule, car il n'est pas nécessaire de laisser à côté de l'ouverture un espace de montage dégagé qui ne doit finalement être prévu que pour le montage d'une bride de fixation.

Un dispositif de fermeture tel que celui décrit précédemment combine l'étanchéité requise avec un faible encombrement et un montage simplifié. Il n'existe notamment aucun risque de perdre une bride de fixation nécessaire au montage du dispositif de fermeture.

D'autres avantages et caractéristiques de la présente invention résultent en outre de la description uniquement indiquée à titre d'exemple d'une forme de réalisation actuellement préférentielle dans laquelle il est fait référence aux dessins joints dans lesquels :
Figure 1 représente une vue de dessus d'un boîtier de filtre à air muni d'un dispositif de fermeture pour ouverture de boîtier conforme à la forme de réalisation préférentielle, le dispositif de fermeture se trouvant dans une position de verrouillage.
Figure 2 représente une vue en coupe transversale du dispositif de fermeture pour l'essentiel selon la ligne de coupe ABCD représentée dans la figure 1 dans une situation avant le montage du dispositif de fermeture.
Figure 3 représente le dispositif de fermeture de la figure 2 pendant une première étape du montage.
Figure 4 représente le dispositif de fermeture de la figure 2 dans une position de déverrouillage.
Figure 5 représente le dispositif de fermeture de la figure 2 dans une position de verrouillage. Celle-ci correspond à une vue en coupe transversale de la ligne de coupe ABCD représentée dans la figure 1.
Figure 6 représente une partie du boîtier de filtre à air et le dispositif de fermeture dans une vue en coupe essentiellement selon la ligne de coupe ABE illustrée dans la figure 1 pendant une première étape de l'opération de montage.
Figure 7 représente la section de boîtier et le dispositif de fermeture de la figure 6 dans une position de déverrouillage.
Figure 8 représente la section de boîtier et le dispositif de fermeture de la figure 6 dans une position de verrouillage. Celle-ci correspond à une vue en coupe transversale selon la ligne de coupe ABE de la figure 1.
Figure 9 représente un schéma qui représente les différentes positions relatives de l'élément par rapport au couvercle.
Figure 10 représente une vue en coupe transversale d'une partie du boîtier de filtre à air et du dispositif de fermeture selon la ligne de coupe FG illustrée dans la figure 1.
Figure 11 représente une vue en coupe transversale d'une partie du boîtier de filtre à air et un dispositif de fermeture correspondant à l'état de la technique.

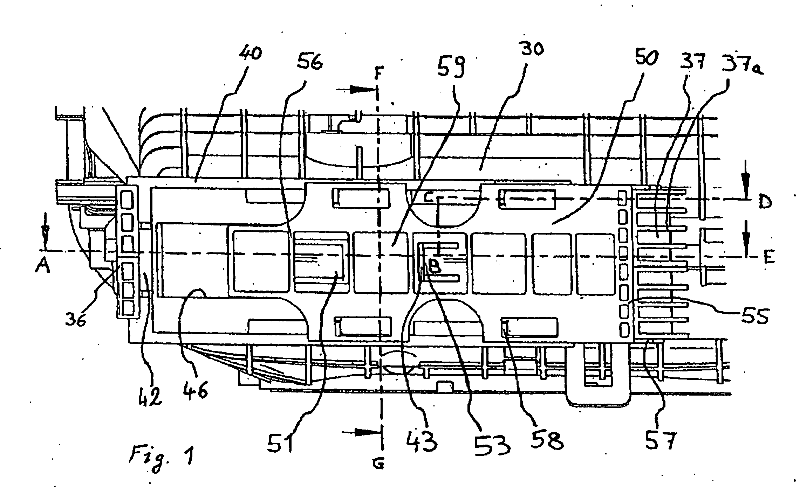

La figure 1 représente un boîtier de filtre à air 30. Une ouverture 32 du boîtier de filtre à air, non représentée dans cette vue de dessus, est fermée par un dispositif de fermeture qui comprend un couvercle 40 et un élément 50. Dans la forme de réalisation représentée, le couvercle 40 est essentiellement rectangulaire. Sur un petit côté, le couvercle présente un bord de charnière 42 qui, lorsque le couvercle est monté sur le boîtier de filtre à air 30, pénètre dans le logement de charnière 36 du boîtier de filtre à air.

L'élément 50 repose sur une partie du couvercle 40. L'élément 50 est monté sur le couvercle 40 de manière à pouvoir coulisser par translation, ce pour quoi le couvercle présente une glissière de guidage 46 qui contribue à un guidage latéral de l'élément 50. Une ou plusieurs poignées noyées 59 qui sont façonnées sur l'élément 50 facilitent à l'utilisateur l'initiation d'un mouvement en translation de l'élément par rapport au couvercle. Les poignées noyées 59 sont séparées les unes des autres par des nervures de renforcement 56 qui fournissent à l'élément la stabilité requise. L'élément présente sur l'un de ses côtés étroits une section d'extrémité 57 qui est conçue pour pénétrer dans un logement 37 du boîtier 30 pendant que l'élément est amené dans sa position de verrouillage. Une nervure de butée 55 sert à limiter le mouvement de l'élément dans une position de verrouillage définie. Pour ce faire, 1a nervure de butée 55 vient en contact avec une section correspondante du logement d'élément 37. Le logement d'élément 37 présente des nervures de renforcement 37a qui fournissent au logement d'élément une stabilité suffisante pour absorber les forces produites par l'élément pendant l'opération de verrouillage. L'élément 50 comprend également différents dispositifs de blocage comme, par exemple, une partie d'un moyen d'enclenchement tel qu'une patte de blocage élastique 51 qui agit conjointement avec une partie en saillie de blocage 41 correspondante du couvercle. Dans une forme de réalisation préférentielle, ces moyens d'enclenchement possèdent une course libre dans le sens du montage et un effet de blocage dans le sens du démontage. Un autre moyen d'enclenchement est fourni par une languette élastique 53 ainsi qu'un bourrelet qui est façonné à l'extrémité de la languette élastique. Ce bourrelet agit conjointement avec une structure profilée 43 façonnée sur le couvercle 40. Lors d'un décalage de l'élément par rapport au couvercle, le bourrelet façonné à l'extrémité de la languette élastique 53 coulisse le long de la structure profilée 43, ce qui dévie la languette élastique 53 et ainsi la sollicite. Comme la force nécessaire à cet effet doit être produite par le mouvement de translation de l'élément par rapport au couvercle, le mouvement de translation est arrêté lorsque la languette 53 et la structure profilée 43 se rencontrent. La languette 53 et la structure profilée 43 forment un mécanisme d'arrêt du mouvement en translation de l'élément 50 par rapport au couvercle 40. Le mouvement en translation ne peut se poursuivre qu'après avoir surmonté la résistance établie par le moyen d'arrêt contre le décalage de l'élément par rapport au couvercle.

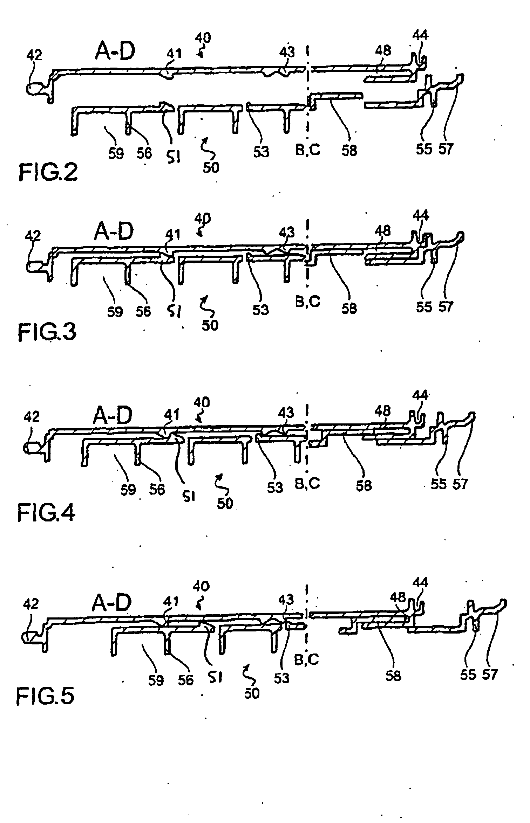

La figure 2 représente une coupe transversale à travers le couvercle 40 et l'élément 50 essentiellement selon la ligne de coupe ABCD de la figure 1, La disposition représentée correspond à une situation dans laquelle le couvercle 40 et l'élément 50 ne sont pas encore réunis, mais seulement alignés pour une opération de montage qui reste à effectuer.

La figure 3 représente une coupe transversale à travers le couvercle 40 et l'élément 50 pendant une première étape de montage de l'élément sur le couvercle. Dans cette situation, le couvercle 40 et l'élément 50 se trouvent dans une position de montage. Dans cette position de montage, l'élément 50 repose sur le couvercle 40. Si le couvercle est muni d'une glissière de guidage 46, l'élément 50 est introduit dans cette glissière de montage 46 en position de montage, ce qui empêche un décalage dans une direction perpendiculaire au plan du dessin. Dans la position de montage représentée, l'élément n'est cependant pas bloqué vers le bas contre une chute. La patte de blocage 51 dispose d'une section en forme de rampe. Cette section en forme de rampe repose sur une section elle aussi en forme de rampe de la partie en saillie de blocage 41. Un mouvement de l'élément vers la droite par rapport au couvercle provoque un coulissement de la section en forme de rampe de la patte de blocage 51 le long de la section en forme de rampe de la partie en saillie de blocage 41, ce qui dévie par fléchissement la patte de blocage 51. À la condition que l'élément 50 soit décalé avec suffisamment de force vers la droite par rapport au couvercle 40, les deux sections en forme de rampe coulissent entièrement l'une devant l'autre. Dès que l'une des deux sections en forme de rampe est complètement passée devant l'autre, la patte de blocage 51, du fait de son élasticité propre au matériau, se rabat dans sa position initiale par rapport à l'élément 50, ce qui donne lieu à un accrochage de la patte de blocage 51 avec la partie en saillie de blocage 41. La patte de blocage 51 et la partie en saillie de blocage 41 présentent ainsi une course libre lorsque l'élément se décale de la position de montage vers une position de déverrouillage par rapport au couvercle. Lors d'un décalage dans l'autre sens, la patte de blocage 51 et la partie en saillie de blocage 41 provoquent par contre un blocage.

Également pendant le déplacement de l'élément de la position de montage vers la position de déverrouillage, une nervure 58 de l'élément 50 s'enfile dans une rainure 48 du couvercle 40. Cet enfilement est facilité par un chanfrein qui est façonné sur l'embouchure de la rainure 48. L'action conjointe de la nervure 58 et de la rainure 48 empêche que l'élément 50 puisse se détacher du couvercle 40 et constitue ainsi un guide de l'élément 50 sur le couvercle 40, le cas échéant conjointement avec la glissière de guidage 46 du couvercle.

La figure 4 représente une coupe transversale du couvercle 40 et de l'élément 50 dans une situation qui correspond à la position déverrouillée du dispositif de fermeture. Dans cette position, les moyens d'enclenchement qui englobent la patte de blocage 51 et la partie en saillie de blocage empêchent que l'élément ne puisse se décaler hors de la position de déverrouillage en direction de la position de montage (figure 3). Un décalage de l'élément 50 dans l'autre direction, par contre, n'est pas totalement interdit, mais seulement arrêté par l'action conjointe de la languette 53 et de la structure profilée 43. La figure 4 illustre en outre que la nervure 58 est au moins partiellement accueillie dans la rainure 48 pendant que le dispositif de fermeture se trouve en position de déverrouillage. L'élément est ainsi bloqué et ne peut pas se détacher du couvercle.

La figure 5 représente elle aussi une coupe transversale à travers le couvercle 40 et l'élément 50 selon la ligne de coupe A-D représentée dans la figure 1, l'élément se trouvant à présent dans une position de verrouillage par rapport au couvercle. En comparaison de la position de déverrouillage du dispositif de fermeture représentée dans la figure 4, la languette 53 se trouve à présent de l'autre côté de la structure profilée 43. Dans cette position également, les moyens d'arrêt composés de la languette 53 et de la structure profilée 43 agissent comme décrit précédemment en référence avec la position de déverrouillage, avec pour différence que le décalage de l'élément 50 est à présent empêché en direction de la position de déverrouillage, c'est-à-dire en sens inverse. De plus, la nervure 58 est presque entièrement logée dans la rainure 48.

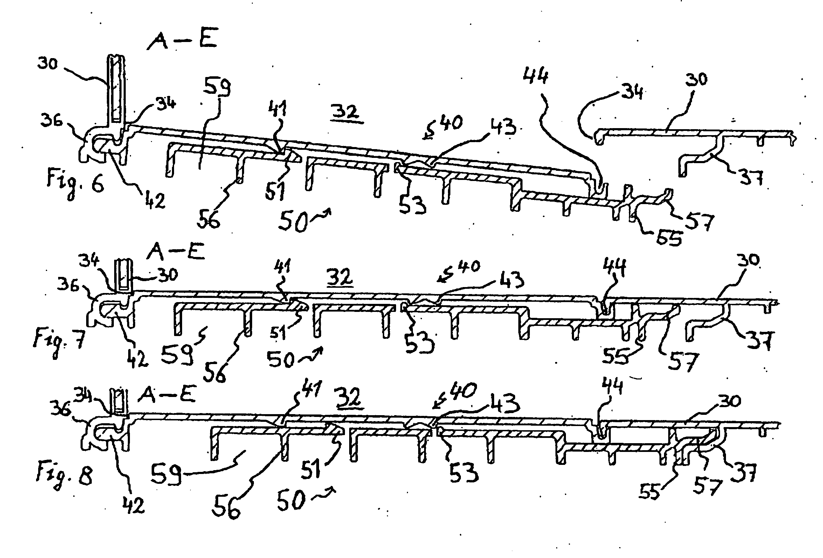

La figure 6 représente une coupe transversale à travers une partie du boîtier de filtre à air 30 et du dispositif de fermeture comprenant le couvercle 40 et l'élément 50 selon la ligne de coupe ABE illustrée dans la figure 1. Le dispositif de fermeture est ici représenté dans une situation dans laquelle le couvercle est accroché au moyen de son bord de charnière 42 dans le logement de charnière 36 du boîtier de filtre à air 30, mais n'a pas encore atteint sa position entièrement fermée. Du fait de la configuration spéciale du logement de charnière 36, il est possible d'introduire le couvercle dans le logement de charnière 36 presque perpendiculairement par rapport à l'ouverture du boîtier 32 et ensuite de le basculer jusqu'à ce que le couvercle soit parallèle à l'ouverture du boîtier ou la recouvre. La figure 6 représente un état intermédiaire pendant le basculement du couvercle. L'élément monté sur le couvercle se trouve en position de déverrouillage par rapport au couvercle. Comme le mouvement de basculement est guidé par l'action combinée du bord de charnière 42 et du logement de charnière 36, le montage du dispositif de fermeture sur le boîtier de filtre à air 30 est facile à réaliser, et ce même lorsque le montage du couvercle doit s'effectuer en partie à l'aveugle.

L'ouverture du boîtier 32 présente un bord 34. À proximité de ce bord 34 peuvent être prévus des moyens d'étanchéité qui, dans la forme de réalisation représentée, comprennent une bourrelet coté boîtier et une rainure 44 côté couvercle qui peut recevoir le bourrelet côté boîtier.

La figure 7 représente la coupe transversale de la figure 6, le dispositif de fermeture se trouvant à présent dans une position dans laquelle le couvercle 40 a adopté sa position de fermeture et où l'élément 50 se trouve en position de déverrouillage.

La figure 8 représente finalement le dispositif de fermeture dans sa position de verrouillage. Dans cette position de verrouillage, le couvercle 40 ferme l'ouverture du boîtier 32 le long de son bord 34 du fait qu'un bourrelet du côté boîtier vient se loger dans une rainure côté couvercle. Pour fermer l'ouverture du boîtier 32 de la manière la plus hermétique possible, le couvercle peut être sollicité en direction de l'intérieur du boîtier afin que la rainure 44 côté couvercle soit comprimée le plus fermement possible contre le bourrelet côté boîtier. Une contrainte de ce type peut être obtenue par le bord de charnière 42 et le logement de charnière 36 d'un côté et par une contrainte qui est provoquée par une section d'extrémité 57 de l'élément 50 agissant conjointement avec un logement d'élément 37 façonné sur le boîtier 30. La section d'extrémité de l'élément 57 et le logement d'élément 37 présent notamment des formes qui facilitent l'insertion de la section d'extrémité de l'élément 57 dans le logement d'élément 37 pendant une première phase du décalage de l'élément par rapport au couvercle. Pendant une deuxième phase du décalage de l'élément par rapport au couvercle en direction de la position de verrouillage, une section réalisée en forme de rampe de la section d'extrémité de l'élément 57 entre en contact avec une section du logement d'élément 37 elle aussi réalisée en forme de rampe. En poursuivant le mouvement de l'élément en direction de la position de verrouillage, l'élément 50 ou sa section d'extrémité 57 est poussé en direction du boîtier de filtre à air 30. Du fait que l'élément et le couvercle sont en contact à proximité de la rainure 44, l'élément peut transmettre au couvercle la force produite pendant la phase finale du décalage. Comme le couvercle 40 est également en contact avec le bord d'ouverture du boîtier 34 au niveau du point de contact, la force se transmet au boîtier. Le résultat est une étanchéité particulièrement efficace à cet endroit. Il se produit un effet similaire au niveau du bord opposé de l'ouverture du boîtier, c'est-à-dire à proximité du logement de charnière 36. Le bord de charnière 42 du couvercle 40 vient notamment s'appuyer sur le logement de charnière 36 et sur le bourrelet côté boîtier. Pour que le couvercle réalise également une fermeture hermétique avec le bord de l'ouverture du boîtier 34 le long de ses côtés longs, l'élément 50 est muni de nervures de renforcement 56 qui peuvent transmettre une force de compression suffisamment élevée sans déformation importante de l'élément.

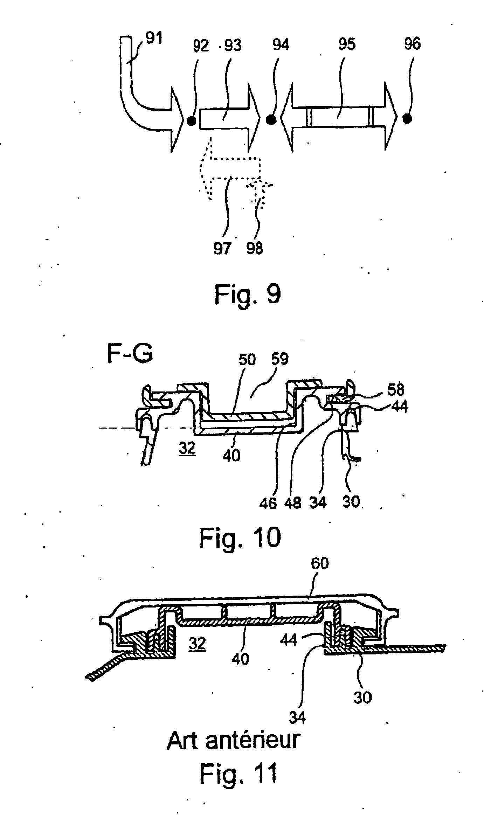

La figure 9 représente un schéma avec les différentes positions relatives de l'élément 50 par rapport au couvercle 40. Les trois positions principales de l'élément sont ici de gauche à droite la position de montage 92, la position de déverrouillage 94 et la position de verrouillage 96. Pendant le montage, l'élément est approché du couvercle puis amené jusqu'à la position de montage 92, comme indiqué par la flèche 91. Depuis la position de montage 91, l'élément peut être amené dans la position de déverrouillage 94 par un décalage le long de la flèche 93. Juste avant d'atteindre la position de déverrouillage, il faut franchir un moyen d'enclenchement qui agit d'un seul côté, et ce dans la direction dans laquelle les moyens d'enclenchement cèdent sans action supplémentaire de la part de l'utilisateur. S'il faut ramener l'élément de la position de déverrouillage 94 vers la position de montage 92, comme indiqué par la flèche 97, les moyens d'enclenchement s'opposent alors à ce décalage si l'utilisateur essaie seulement de pousser l'élément dans cette direction. Le décalage de l'élément de la position de déverrouillage 94 vers la position de montage 92 ne réussit que si l'utilisateur dévie en plus les moyens d'enclenchement transversalement par rapport au sens du décalage, comme indiqué par la flèche 98. Entre la position de déverrouillage 94 et la position de verrouillage 96, l'élément peut être décalé dans les deux directions, ce qui est indiqué par la double flèche 95. Toutefois, avant que l'élément 50 quitte l'une ou l'autre des deux positions, il faut surmonter un arrêt qui est symbolisé par les deux doubles traits perpendiculaires.

La figure 10 représente une coupe transversale du dispositif de fermeture selon la présente invention dans laquelle le plan de coupe s'étend le long de la ligne F-G représentée dans la figure 1. Le couvercle 40 présente un profilé essentiellement en forme de M, alors que l'élément 50 présente un profilé essentiellement en forme de U. Une telle configuration est en mesure de fournir à l'élément 50 la rigidité nécessaire. La nervure 58 de l'élément vient en prise dans la rainure 48 du couvercle, ce qui empêche que l'élément 50 se détache du couvercle 40. Un bourrelet est également prévu du côté du boîtier le long du côté long du bord de boîtier 34 de l'ouverture du boîtier 32, ainsi qu'une rainure 44 du côté du couvercle, lesquels servent à établir l'étanchéité de la transition entre le boîtier et le couvercle. Bien évidemment, il est possible d'employer des méthodes d'étanchéification différentes de celle illustrée ici.

La figure 11 représente un dispositif de fermeture selon l'état de la technique. Il est prévu un couvercle 40 pour recouvrir une ouverture de boîtier 32. L'étanchéité de l'ouverture de boîtier est réalisée par un joint à bourrelet/rainure, la rainure 44 étant façonnée sur le couvercle 40. Une bride 60 sert à fixer le couvercle 40 au boîtier 30. Comme la bride 60 est un élément séparé, il faut la fixer au boîtier et au couvercle au cours d'une deuxième étape pendant l'opération de fermeture de l'ouverture de boîtier 32. Il existe un risque de perte de la bride pendant l'étape de montage de la bride 60, notamment en présence d'un espace restreint.

Bien que la présente invention a ici été décrite entièrement et à titre d'exemple en se référant à une forme de réalisation actuellement préférentielle, l'homme de l'art pourra constater que différentes variations et modifications sont possibles dans le cadre des revendications. Il faut ainsi comprendre que le couvercle et l'élément peuvent également présenter un profilé transversal essentiellement plat, par exemple. Il est également possible de s'écarter de la forme rectangulaire au profit de formes plus générales. Pour terminer, la réalisation de l'étanchéité entre le couvercle et le boîtier ne se limite par à celle représentée ou décrite ici.

## Revendications

1. Dispositif de fermeture d'un équipement de chauffage, de ventilation et/ou de climatisation d'un véhicule, d'une ouverture (32) dans un boîtier (30) comprenant un couvercle (40) allongé et un élément (50) allongé qui s'étend le long d'un axe du couvercle (40), des moyens de guidage étant prévus sur le couvercle, lesquels permettent un décalage en longueur de l'élément (50), au moins par section,
au-delà de l'extension longitudinale du couvercle (40) et entre deux positions de l'élément par rapport au couvercle (40),
**caractérisé en ce que** le couvercle comporte, sur un de ces cotés, un bord de charnière (42) apte à pénétrer dans un logement de charnière (36) du boîtier (30), et **en ce que** l'élément (50) comporte, sur un de ces cotés opposé au coté sur lequel se trouve le bord de charnière (42), une section d'extrémité (57) apte à pénétrer dans un logement (37) du boîtier (30).

2. Dispositif de fermeture selon la revendication 1, dans lequel l'une des deux positions correspond à une position de déverrouillage (94) de l'élément (50) et l'autre des deux positions correspond à une position de verrouillage (96) de l'élément (50) dans laquelle l'élément (50) dépasse par section au-delà de la projection longitudinale du couvercle (40).

3. Dispositif de fermeture selon la revendication 2, dans lequel sont prévus des moyens d'enclenchement (41, 51) pour limiter le déplacement longitudinal de l'élément (50) au-delà de la position de déverrouillage (94).

4. Dispositif de fermeture selon la revendication 3, dans lequel les moyens d'enclenchement (41, 51) sont amovibles et, lorsque les moyens d'enclenchement (41, 51) sont détachés, l'élément (50) peut être amené de la position de déverrouillage (94) en une position de montage (92) dans laquelle l'élément (50) et le couvercle (40) sont séparables et assemblables.

5. Dispositif de fermeture selon l'une des revendications 2 à 4, selon lequel il existe un mécanisme d'arrêt (43, 53) qui est conçu pour bloquer l'élément (50) contre un décalage de la position de verrouillage (96) en direction de la position de déverrouillage (94).

6. Dispositif de fermeture selon l'une des revendications 2 à 5, dans lequel l'élément (50) en position de fermeture vient en prise par section avec le boîtier (30).

7. Dispositif de fermeture selon l'une des revendications 1 à 6, dans lequel l'élément (50) s'étend le long d'une surface extérieure du couvercle (40).

8. Dispositif de fermeture selon l'une des revendications 1 à 7, dans lequel l'élément (50) comprend une nervure (58) qui est guidée dans une rainure (48) façonnée sur le couvercle (40).

9. Procédé de montage d'un dispositif de fermeture selon l'une des revendications précédentes, comprenant un couvercle (40) et un élément (50), **caractérisé en ce qu'**il comporte une première étape de montage dans laquelle l'élément (50) est monté sur le couvercle (40) dans une position de montage (92) de manière à pouvoir coulisser par translation.

10. Procédé de montage selon la revendication 9, **caractérisé en ce que** le couvercle (40) est muni d'une glissière de guidage (46), et **en ce que**, en position de montage (92), l'élément (50) est introduit dans la glissière de montage (46).

11. Procédé de montage selon la revendication 9 ou 10, **caractérisé en ce qu'**il comprend une deuxième étape de montage dans laquelle l'élément (50) est décalé par rapport au couvercle (40) dans une position de déverrouillage (94) de sorte qu'une patte de blocage élastique (51) de l'élément (56) agisse conjointement avec une partie en saillie de blocage (41) correspondante du couvercle (40) pour créer un accrochage de la patte de blocage (51) avec la partie en saillie de blocage (41).

12. Procédé de montage selon la revendication 11, **caractérisé en ce que** le couvercle (40) est muni d'une une rainure (48) et l'élément (50) est porvu d'une nervure (58) et **en ce que**, en position de déverrouillage (94), une nervure (58) de l'élément (50) est enfilée dans la rainure (48) du couvercle (40).

13. Équipement de chauffage, de ventilation et/ou de climatisation d'un véhicule comprenant un dispositif de fermeture selon l'une des revendications 1 à 8.

14. Équipement de chauffage, de ventilation et/ou de climatisation selon la revendication 13, **caractérisé en ce que** le dispositif de fermeture est monté sur un boîtier (30) et comprend un couvercle (40) et un élément (50) et **en ce que** le couvercle (50) est accroché dans un logement de charnière (36) du boîtier (30) par un bord de charnière (42).

15. Équipement de chauffage, de ventilation et/ou de climatisation selon la revendication 14, **caractérisé en ce que** le dispositif de fermeture est basculée par l'action combinée du bord de charnière (42) et du logement de charnière (36) jusqu'à une position de fermeture dans laquelle le couvercle (40) ferme l'ouverture (32) du boîtier (30) et l'élément (50) se trouve en position de déverrouillage (94).

16. Équipement de chauffage, de ventilation et/ou de climatisation selon la revendication 15, **caractérisé en ce qu'**une section d'extrémité (57) disposée sur l'un de ses côtés étroits de l'élément (50) pénètre dans un logement (37) du boîtier (30) pendant que l'élément (50) est amené de la position de déverrouillage (94) à une position de verrouillage (96).

## Claims

1. Closure device for an opening (32) in a housing (30) of heating, ventilating and/or air conditioning equipment of a vehicle, comprising an elongate cover (40) and an elongate element (50) that extends along an axis of the cover (40), guidance means being provided on the cover, which enable the element (50) to be shifted in length, at least by section, beyond the longitudinal extension of the cover (40) and between two positions of the element with respect to the cover (40),
**characterised in that** the cover comprises, on one of these sides, a hinge edge (42) able to enter a hinge housing (36) of the housing (30), and **in that** the element (50) comprises, on one of these sides opposite to the side on which the hinge edge (42) is situated, an end section (57) able to enter a housing (37) in the housing (30).

2. Closure device according to claim 1, wherein one of the two positions corresponds to a position (94) of unlocking the element (50) and the other one of the two positions corresponds to a position (96) of locking the element (50), wherein the element (50) projects by section beyond the longitudinal projection of the cover (40).

3. Closure device according to claim 2, wherein engagement means (41, 51) are provided for limiting the longitudinal movement of the element (50) beyond the unlocking position (94).

4. Closure device according to claim 3, wherein the engagement means (41, 51) are removable and, when the engagement means (41, 51) are detached, the element (50) can be brought from the unlocking position (94) into a mounting position (92) in which the element (50) and the cover (40) are separable and assemblable.

5. Closure device according to one of claims 2 to 4, according to which there exists a stop mechanism (43, 53) that is designed to lock the element (50) against a shift from the locking position (96) in the direction of the unlocking position (94).

6. Closure device according to one of claims 2 to 5, wherein the element (50) in the closure position comes into engagement by section with the housing (30).

7. Closure device according to one of claims 1 to 6, wherein the element (50) extends along an external surface of the cover (40).

8. Closure device according to one of claims 1 to 7, wherein the element (50) comprises a rib (58) that is guided in a groove (48) made on the cover (40).

9. Method of mounting a closure device according to any one of the preceding claims, comprising a cover (40) and an element (50), **characterised in that** it comprises a first mounting step in which the element (50) is mounted on the cover (40) in a mounting position (92) so as to be able to slide by translation.

10. Mounting method according to claim 9, **characterised in that** the cover (40) is provided with a guidance runner (46), and **in that**, in the mounting position (92), the element (50) is introduced into the mounting runner (46).

11. Mounting method according to claim 9 or 10, **characterised in that** it comprises a second mounting step in which the element (50) is shifted with respect to the cover (40) in an unlocking position (94) so that an elastic locking lug (51) of the element (56) acts conjointly with a corresponding projecting locking part (41) of the cover (40) in order to create an engagement of the locking lug (51) with the projecting locking part (41).

12. Mounting method according to claim 11, **characterised in that** the cover (40) is provided with a groove (48) and the element (50) is provided with a rib (58) and **in that**, in the unlocking position (94), a rib (58) of the element (50) is fitted in the groove (48) of the cover (40).

13. Heating, ventilation and/or air conditioning equipment for a vehicle, comprising a closure device according to one of claims 1 to 8.

14. Heating, ventilation and/or air conditioning equipment according to claim 13, **characterised in that** the closure device is mounted on a housing (30) and comprises a cover (40) and an element (50) and **in that** the cover (40) is engaged in a hinge housing (36) of the housing (30) by a hinge edge (42).

15. Heating, ventilation and/or air conditioning equipment according to claim 14, **characterised in that** the closure device is tilted by the combined action of the hinge edge (42) and the hinge housing (36) as far as a closure position in which the cover (40) closes the opening (42) in the housing (30) and the element (50) is situated in the unlocking position (94).

16. Heating, ventilation and/or air conditioning equipment according to claim 15, **characterised in that** an end section (57) disposed on one of its narrow sides of the element (50) enters a housing (37) in the housing (30) while the element (50) is brought from the unlocking position (94) to a locking position (96).

## Patentansprüche

1. Vorrichtung zum Schließen einer Öffnung (32) in einem Gehäuse (30) eines Heizungs-, Lüftungs- und/oder Klimageräts eines Fahrzeugs, das einen länglichen Deckel (40) und ein längliches Element (50), das sich an einer Achse des Deckels (40) entlang erstreckt, umfasst, wobei Führungsmittel auf dem Deckel bereitgestellt werden, welche eine mindestens abschnittsweise Längsverlagerung des Elements (50) über die Längserstreckung des Deckels (40) hinaus und zwischen zwei Positionen des Elements im Verhältnis zum Deckel (40) ermöglichen,
**dadurch gekennzeichnet, dass** der Deckel auf einer dieser Seiten einen Scharnierrand (42) umfasst, der dazu geeignet ist, in eine Scharnieraufnahme (36) des Gehäuses (30) einzudringen, und dass das Element (50) auf einer dieser Seiten gegenüber der Seite, auf der sich der Scharnierrand (42) befindet, einen Endabschnitt (57) umfasst, der dazu geeignet ist, in eine Aufnahme (37) des Gehäuses (30) einzudringen.

2. Verschlussvorrichtung nach Anspruch 1, wobei eine der beiden Positionen einer Entriegelungsposition (94) des Elements (50) entspricht und die andere der beiden Positionen einer Verriegelungsposition (96) des Elements (50) entspricht, in der das Element (50) abschnittsweise über den Längsvorsprung des Deckels (40) hinausragt.

3. Verschlussvorrichtung nach Anspruch 2, wobei Einrastmittel (41, 51) bereitgestellt werden, um die Längsverschiebung des Elements (50) über die Entriegelungsposition (84) hinaus zu begrenzen.

4. Verschlussvorrichtung nach Anspruch 3, wobei die Einrastmittel (41, 51) abnehmbar sind, und, wenn die Einrastmittel (41, 51) abgenommen sind, das Element (50) von der Entriegelungsposition (94) in eine Montageposition (92) gebracht werden kann, in der das Element (50) und der Deckel (40) trennbar und zusammenfügbar sind.

5. Verschlussvorrichtung nach einem der Ansprüche 2 bis 4, wobei ein Sperrmechanismus (43, 53) vorhanden ist, der dazu ausgelegt ist, um das Element (50) gegen eine Verlagerung der Verriegelungsposition (96) in Richtung auf die Entriegelungsposition (94) zu blockieren.

6. Verschlussvorrichtung nach einem der Ansprüche 2 bis 5, wobei das Element (50) in der Verschlussposition abschnittsweise in das Gehäuse (30) eingreift.

7. Verschlussvorrichtung nach einem der Ansprüche 1 bis 6, wobei das Element (50) sich an einer Außenfläche des Deckels (40) entlang erstreckt.

8. Verschlussvorrichtung nach einem der Ansprüche 1 bis 7, wobei das Element (50) eine Rippe (58) umfasst, die in einer Rille (48) geführt wird, die auf dem Deckel (40) geformt ist.

9. Verfahren zur Montage einer Verschlussvorrichtung nach einem der vorhergehenden Ansprüche, umfassend einen Deckel (40) und ein Element (60), **dadurch gekennzeichnet, dass** es einen ersten Montageschritt umfasst, in dem das Element (50) auf dem Deckel (40) in einer Montageposition (92) derart montiert wird, dass es translationsmäßig gleiten kann.

10. Montageverfahren nach Anspruch 9, **dadurch gekennzeichnet, dass** der Deckel (40) mit einer Gleitführung (46) versehen ist, und dass das Element (50) in der Montageposition (92) in die Montageschiene (48) eingefügt ist.

11. Montageverfahren nach Anspruch 9 oder 10, **dadurch gekennzeichnet, dass** es einen zweiten Montageschritt umfasst, in dem das Element (50) im Verhältnis zum Deckel (40) in eine Entriegelungsposition (94) verlagert ist, so dass eine elastische Blockierungslasche (51) des Elements (56) zusammen mit einem entsprechenden vorstehenden Blockierungsteil (41) des Deckels (40) wirkt, um eine Verhakung der Blockierungslasche (51) mit dem vorstehenden Blockierungsteil (41) zu schaffen.

12. Montageverfahren nach Anspruch 11, **dadurch gekennzeichnet, dass** der Deckel (40) mit einer Rille (48) versehen ist und das Element (50) mit einer Rippe (58) versehen ist, und dass in der Entriegelungsposition (94) eine Rippe (58) des Elements (50) in die Rille (48) des Deckels (40) eingeschoben ist.

13. Heizungs-, Lüftungs- und/oder Klimagerät eines Fahrzeugs, umfassend eine Verschlussvorrichtung nach einem der Ansprüche 1 bis 8.

14. Heizungs-, Lüftungs- und/oder Klimagerät nach Anspruch 13, **dadurch gekennzeichnet, dass** die Verschlussvorrichtung auf einem Gehäuse (30) montiert ist und einen Deckel (40) und ein Element (50) umfasst, und dass der Deckel (50) in einer Scharnieraufnahme (36) des Gehäuses (30) an einem Scharnierrand (42) verhakt ist.

15. Heizungs-, Lüftungs- und/oder Klimagerät nach Anspruch 14, **dadurch gekennzeichnet, dass** die Verschlussvorrichtung durch die kombinierte Einwirkung des Scharnierrandes (42) und der Scharnieraufnahme (36) bis in eine Verschlussposition, in welcher der Deckel (40) die Öffnung (32) des Gehäuses (30) schließt und das Element (50) sich in der Entriegelungsposition befindet, gekippt wird.

16. Heizungs-, Lüftungs- und/oder Klimagerät nach Anspruch 15, **dadurch gekennzeichnet, dass** ein Endabschnitt (57), der auf einer seiner kurzen Seiten des Elements (50) in eine Aufnahme (37) des Gehäuses (30) eindringt, während das Element (50) von der Entriegelungsposition (94) in eine Verriegelungsposition (96) gebracht wird.
